# EUROPÄISCHE PATENTANMELDUNG

(11) **EP 2 273 462 A1**
(43) Veröffentlichungstag der Anmeldung: **12.01.2011**
(21) Anmeldenummer: 09008897.2
(22) Anmeldetag: 08.07.2009
(51) Int. Cl.: G07F 15/00, G06Q 20/00

(54) **System zur Stromversorgung eines Elektrofahrzeuges auf einem Stellplatz**

(71) Anmelder: SkiData AG, 5083 Grödig/Salzburg (AT)
(72) Erfinder: Wass, Clemens, Dr., 5020 Salzburg (AT)
(74) Vertreter: Karakatsanis, Georgios

(57) **Zusammenfassung**

Es wird ein System zur Stromversorgung eines Elektrofahrzeugs auf einem Stellplatz vorgeschlagen, welches für jeden Stellplatz oder für eine Gruppe von Stellplätzen einen dem Stellplatz bzw. der Gruppe von Stellplätzen zugeordneten Ladestützpunkt aufweist, der Mittel zur Stromversorgung des Elektroautos, zur Erfassung des verbrauchten Stroms, zur Identifikation bzw. Erfassung des Fahrzeugs zum Zweck der Abrechnung des verbrauchten Stroms und eine Einrichtung zur Bezahlung des verbrauchten Stroms umfasst.

## Beschreibung

Die vorliegende Erfindung bezieht sich auf ein System zur Stromversorgung eines Elektrofahrzeugs auf einem Stellplatz gemäß dem Oberbegriff des Patentanspruchs 1.

Elektrofahrzeuge, insbesondere Elektroautos erfahren in letzter Zeit eine gesteigerte Aufmerksamkeit. Insbesondere aufgrund der Entwicklung der Akkumulatorentechnologie und der Preiserhöhungen für fossile Brennstoffe sind Fahrzeuge mit reinem Elektroantrieb eine Alternative zur herkömmlichen Fahrzeugen. Hierbei ist in den nächsten Jahren mit einem Anstieg der zugelassenen Elektrofahrzeuge zu rechnen.

Um derartige Fahrzeuge betreiben zu können, sind Ladestützpunkte erforderlich, welche der Stromversorgung, nämlich dem Laden der Akkumulatoren dieser Fahrzeuge dienen.

Der vorliegenden Erfindung liegt die Aufgabe zugrunde, ein System zur Stromversorgung eines Elektrofahrzeugs auf einem Stellplatz anzugeben, mittels dessen die Akkumulatoren eines Elektrofahrzeugs während des Parkaufenthalts des Fahrzeugs auf dem Stellplatz, beispielsweise auf einem Stellplatz eines Parkhauses sowie die Bezahlung des verbrauchten Stroms auf einfache Weise ermöglicht wird.

Diese Aufgabe wird für ein System zur Stromversorgung eines Elektrofahrzeugs auf einem Stellplatz durch die Merkmale des Patentanspruchs 1 gelöst. Weitere erfindungsgemäße Ausgestaltungen und Vorteile gehen aus den Unteransprüchen hervor.

Demnach wird ein System zur Stromversorgung eines Elektrofahrzeugs auf einem Stellplatz vorgeschlagen, welches für jeden Stellplatz oder für eine Gruppe von Stellplätzen einen dem Stellplatz bzw. der Gruppe von Stellplätzen zugeordneten Ladestützpunkt aufweist, welcher Mittel zur Stromversorgung des Elektroautos, zur Erfassung des verbrauchten Stroms und zur Identifikation bzw. Erfassung des Fahrzeugs zum Zweck der Abrechnung des verbrauchten Stroms umfasst.

Die Mittel zur Stromversorgung eines Elektroautos sind vorzugsweise als ein an eine entsprechende Stelle des Fahrzeugs anschließbares Kabel oder als Einrichtungen zum berührungslosen Laden der Akkumulatoren des Fahrzeugs, beispielsweise durch Induktion ausgeführt.

Das erfindungsgemäße System umfasst des weiteren eine Einrichtung zur Bezahlung des verbrauchten Stroms, welche beispielsweise in eine Zutrittskontrollvorrichtung für den Stellplatz oder für ein Parkhaus, in dem der Stellplatz vorgesehen ist, integriert sein kann.

Gemäß einer bevorzugten Ausführungsform der Erfindung sind die Mittel zur Identifikation bzw. Erfassung des Fahrzeugs als RFID- bzw. NFC- fähige Geräte ausgeführt; hierbei ist vorgesehen, dass der Benutzer des mit Strom zu versorgenden Elektrofahrzeugs nach dem Abstellen des Fahrzeugs auf einem Stellplatz und nach dem Anschließen der Mittel zur Stromversorgung an das Fahrzeug die Stromversorgung durch eine RFID- bzw. NFC-Interaktion zwischen einem mobilen Gerät, beispielsweise einem Mobiltelefon und der Mittel zur Identifikation bzw. Erfassung des Fahrzeugs aktiviert.

Hierbei wird das Fahrzeug durch eine eindeutige Zuordnungsnummer, beispielsweise durch die Mobiltelefonnummer, die Nummer der SIM-Karte oder über eine während der RFID- bzw. NFC-Interaktion zu vergebende Nummer, die im mobilen Gerät bzw. im Mobiltelefon gespeichert wird, erfasst bzw. identifiziert. Der Stromverbrauch wird dieser Nummer zugeordnet, sodass der Benutzer nach Beendigung der Stromversorgung beim Verlassen des Stellplatzes mittels einer erneuten RFID- bzw. NFC-Interaktion zwischen seinem mobilen Gerät und der Einrichtung zur Bezahlung über im mobilen Gerät bzw. Mobiltelefon gespeicherten Kreditkarten- oder Bankverbindungsdaten oder über eine Direktbezahlung über die Telefonnummer des Mobiltelefons bezahlen kann.

Alternativ dazu kann nach der erneuten RFID- bzw. NFC-Interaktion der zu zahlende Betrag auf einem Display der Einrichtung zur Bezahlung angezeigt werden, wobei anschließend die Bezahlung mittels einer Kreditkarte oder mit Bargeld erfolgen kann. Hierbei kann, für den Fall, dass die Einrichtung zur Bezahlung in eine Zugangskontrollvorrichtung integriert ist, was in einem Parkhaus der Fall sein kann, dies vom Fahrzeug aus erfolgen. Zur Realisierung der oben beschriebenen Vorgehensweise werden die Verbrauchsinformationen sowie die eindeutige Zuordnungsnummer des Fahrzeugs von den Mitteln zur Identifikation bzw. Erfassung des Fahrzeugs direkt oder über einen zentralen Server, welcher mit der Einrichtung zur Bezahlung verbunden ist, an die Einrichtung zur Bezahlung übermittelt.

Gemäß einer weiteren Ausführungsform der Erfindung kann nach Beendigung der Stromversorgung des Fahrzeugs mittels einer erneuten RFID- bzw. NFC-Interaktion zwischen dem tragbaren Gerät bzw. Mobiltelefon des Benutzers und dem RFID- bzw. NFCfähigen Gerät des Ladestützpunktes der dem Stromverbrauch entsprechende Betrag auf das tragbare Gerät, beispielsweise in Form eines ein- oder zweidimensionalen Barcodes übertragen werden. Beim Verlassen des Stellplatzes bzw. des Parkhauses wird durch eine RFID- bzw. NFC-Interaktion zwischen dem tragbaren Gerät und der Einrichtung zur Bezahlung bzw. der Zugangskontrollvorrichtung oder durch einen Scanvorgang der Barcode ausgelesen und der zu zahlende Betrag angezeigt. Anschließend erfolgt die Bezahlung wie oben beschrieben. Durch diese Variante der Erfindung wird in vorteilhafter Weise die Verbindung des Ladestützpunktes mit einen zentralen Server vermieden.

Für den Fall, dass die Einrichtung zur Bezahlung in eine Zutrittskontrollvorrichtung, beispielsweise in eine Zutrittskontrollvorrichtung eines Parkhauses integriert ist, wird beim Verlassen des Parkhauses als zu zahlender Betrag der Betrag angezeigt, der sich aus dem Stromverbrauch und den Parkgebühren ergibt. Die Bezahlung des verbrauchten Stroms erfolgt somit in vorteilhafter Weise in einem Schritt mit der Bezahlung der Parkgebühren.

Gemäß einer weiteren Ausführungsform der Erfindung umfassen die Mittel zur Identifikation bzw. Erfassung des Elektrofahrzeugs eine Einrichtung zur Kennzeichenerfassung des Fahrzeugs, wobei nach erfolgter Kennzeichenerfassung die Stromversorgung aktivierbar ist. Hierbei wird beim Verlassen des Stellplatzes anhand derselben oder einer weiteren Einrichtung zur Kennzeichenerfassung das Fahrzeug identifiziert und an der Einrichtung zur Bezahlung der zu zahlende Betrag, der dem Stromverbrauch entspricht, angezeigt. Die Vorgehensweise zur Bezahlung entspricht vorzugsweise der oben angegebenen Vorgehensweise.

Für den Fall, dass die Einrichtung zur Bezahlung des Stromverbrauchs in eine Zugangskontrollvorrichtung integriert ist, was beispielsweise bei einem Parkhaus der Fall sein kann, ist es zweckmäßig, dass das Fahrzeug mittels der Einrichtung zur Kennzeichenerfassung beim Einfahren in das Parkhaus erfasst wird. Auf diese Weise können beim Verlassen des Parkhauses anhand der erneuten Kennzeichenerfassung die Parkgebühr und die Gebühr für den Stromverbrauch gleichzeitig, d.h. in einem Schritt entrichtet werden.

Ferner kann gemäß einer weiteren Ausführungsform der Erfindung vorgesehen sein, dass die Mittel zur Identifikation bzw. Erfassung des Fahrzeugs eine Einrichtung zur Herstellung einer drahtlosen Netzwerkverbindung, beispielsweise eine WLAN-Einrichtung umfassen, welche mit einer Einrichtung zur Herstellung einer drahtlosen Netzwerkverbindung bzw. einer WLAN-Einrichtung des Fahrzeugs oder eines tragbaren Gerätes, beispielsweise eines Mobiltelefons des Benutzers eine Verbindung herstellen kann, über die eine eindeutige Zuordnungsnummer, beispielsweise das Fahrzeugkennzeichen, die Mobiltelefonnummer oder die Nummer der SIM-Karte des Mobiltelefons an die Mittel zur Identifikation bzw. Erfassung des Fahrzeugs übertragen werden kann, wobei der Stromverbrauch der Zuordnungsnummer zuordenbar ist, welche der Abrechnung des Stromverbrauchs dient. Die drahtlose Netzwerkverbindung kann beispielsweise auch über ein UMTS - Netz erfolgen.

Es ist auch möglich, mittels dieser drahtlosen Verbindung als Zuordnungsnummer eine eindeutige Nummer zu vergeben, welche in einem Computer des Fahrzeugs oder im tragbaren Gerät bzw. im Mobiltelefon des Benutzers gespeichert wird und beim Verlassen des Stellplatzes bzw. des Parkhauses herangezogen wird, um den dem Stromverbrauch entsprechenden Betrag anzuzeigen, um die Bezahlung zu ermöglichen. Die Stromversorgung ist nach erfolgter Übertragung der Zuordnungsnummer aktivierbar.

Nach Beendigung der Stromversorgung wird beim Verlassen des Stellplatzes mittels einer drahtlosen Netzwerkverbindung bzw. einer WLAN - Verbindung zwischen einem Computer des Fahrzeugs oder dem mobilen Gerät bzw. dem Mobiltelefon des Benutzers und der Einrichtung zur Bezahlung anhand der Zuordnungsnummer der zu zahlende Betrag ermittelt; dieser kann beispielsweise über im Computer des Fahrzeugs oder im mobilen Gerät bzw.

Mobiltelefon des Benutzers gespeicherte Kreditkarten- oder Bankverbindungsdaten oder über eine Direktbezahlung über die Telefonnummer des Mobiltelefons bezahlt werden, wobei die Verbrauchsinformationen sowie die eindeutige Zuordnungsnummer des Fahrzeugs von den Mitteln zur Identifikation bzw. Erfassung des Fahrzeugs direkt oder über einen zentralen Server, welcher mit der Einrichtung zur Bezahlung verbunden ist, an die Einrichtung zur Bezahlung übermittelt werden.

Für den Fall eines Parkhauses wird das Fahrzeug beim Einfahren in ein Parkhaus anhand einer herzustellenden drahtlosen Netzwerkverbindung bzw. WLAN-Verbindung zwischen dem Fahrzeug oder einem tragbaren Gerät bzw. dem Mobiltelefon des Benutzers und einer Zutrittskontrollvorrichtung anhand einer oben beschriebenen Zuordnungsnummer erfasst, sodass beim Verlassen des Parkhauses in einem Schritt sowohl die Parkgebühren als auch die dem Stromverbrauch entsprechenden Gebühren bezahlt werden können.

Gemäß einer besonders vorteilhaften Ausführungsform der Erfindung wird vorgeschlagen, für den Fall, dass die Stromversorgung des Elektrofahrzeugs über ein an das Fahrzeug anzuschließendes Kabel erfolgt, das Kabel derart auszuführen, dass neben der Stromleitung auch eine Datenleitung vorgesehen ist, über die der Identifikation- bzw. der Erfassung des Fahrzeugs dienenden Daten von einem Computer des Fahrzeugs an den Ladestützpunkt übertragen werden können. Hierbei kann durch das Kabel das Kennzeichen des Fahrzeugs an den Ladestützpunkt übertragen werden, sodass beim Verlassen des Stellplatzes anhand einer Kennzeichenerkennung des Fahrzeugs die zu zahlende Summe angezeigt werden kann. Es ist auch möglich, über das Kabel durch entsprechende Bedienung des Benutzers die dem Stromverbrauch entsprechende Summe über im Computer des Fahrzeugs gespeicherten Kreditkarten- oder Bankverbindungsdaten zu bezahlen.

Alternativ zu der Ausführung des Kabels mit einer Stromleitung und einer Datenleitung kann erfindungsgemäß vorgesehen sein, dass die Datenübertragung von einem Computer des Fahrzeugs an den Ladestützpunkt zur Identifikation- bzw. Erfassung des Fahrzeugs sowie zur Übermittlung von Kreditkarten- oder Bankverbindungsdaten über die Stromleitung des Kabels erfolgt.

Gemäß einer weiteren Ausführungsform der vorliegenden Erfindung wird vorgeschlagen, dass die Mittel zur Identifikation bzw. Erfassung des mit Strom zu versorgenden Elektrofahrzeugs eine Leseeinrichtung für eine RFID- bzw. NFC-Karte, für eine Barcodekarte oder für eine Magnetkarte umfassen, wobei die Aktivierung der Stromversorgung durch Einlesen der Karte erfolgt. Der Fahrer des Fahrzeugs kann diese Karte beispielsweise durch eine geeignete Einrichtung des Ladestützpunktes erhalten; für den Fall eines Parkhauses ist diese Karte vorzugsweise das Parkticket, welches der Fahrer beim Einfahren in das Parkhaus erhält.

Gemäß einer Variante der Erfindung wird von den Mitteln zur Identifikation bzw. Erfassung des mit Strom zu versorgenden Elektrofahrzeugs die Nummer der Karte oder weitere geeignete auf der Karte angelegte Daten ausgelesen, wobei zur Ermittlung des für die Stromversorgung zu zahlenden Betrags die Karte von der Einrichtung zur Bezahlung eingelesen wird, wobei die Zuordnung des Stromverbrauchs zum Fahrzeug anhand der Kartennummer oder der weiteren geeigneten auf der Karte abgelegten Daten erfolgt.

Für den Fall eines Parkhauses wird beim Bezahlen der Parkgebühr am Parkautomaten oder an einer am Ausgang angeordneten Zugangskontrollvorrichtung anhand der Nummer der Karte bzw. des Parktickets oder anhand der weiteren geeigneten auf der Karte abgelegten Daten der Stromverbrauch dem Fahrzeug zugeordnet und die Summe aus den Parkgebühren und den Gebühren für den verbrauchten Strom zur Bezahlung angezeigt.

Um eine für die oben beschriebene Vorgehensweise erforderliche Vernetzung des Ladestützpunktes mit dem Parkautomaten bzw. mit einer Zutrittskontrollvorrichtung zu vermeiden, kann vorgesehen sein, dass nach Beendigung der Stromversorgung eine erneute Interaktion der Karte mit der Leseeinrichtung erfolgt, wobei in diesem Fall die Leseeinrichtung auch als Schreibeinrichtung für eine RFID- bzw. NFC-Karte, eine Barcodekarte oder eine Magnetkarte ausgeführt ist. Hierbei wird der für den Stromverbrauch zu zahlende Betrag auf der Karte kodiert, sodass der Benutzer des Fahrzeugs beim Verlassen des Stellplatzes bzw. Parkhauses die Karte benutzen kann, um an einem Parkautomaten oder an einer Zutrittskontrollvorrichtung die dem Stromverbrauch entsprechenden Gebühren zu bezahlen, wobei für den Fall eines Parkhauses auch die Parkgebühren gleichzeitig bezahlt werden können.

Ferner kann zur Vereinfachung der Erfassung des Fahrzeugs sowie der Bezahlung des Stromverbrauchs der Ladestützpunkt als Mittel zur Identifikation bzw. Erfassung des Fahrzeugs eine Leseeinrichtung für bereits vorbezahlte Stromversorgungsberechtigungen aufweisen, wobei die Stromversorgung nach dem Einlesen einer vorbezahlten Stromversorgungsberechtigung beginnt und beendet wird, wenn der dem Stromverbrauch entsprechende Betrag dem vorbezahlten Betrag entspricht oder wenn die Akkumulatoren des Fahrzeugs vollständig geladen sind

Insbesondere kann der Ladestützpunkt als Mittel zur Identifikation bzw. Erfassung des Fahrzeugs eine Leseeinrichtung für Prepaid-Karten aufweisen, sodass die Stromversorgung nach dem Einlesen einer Prepaid-Karte, die als RFID- bzw. NFC-Karte oder als Magnetkarte ausgeführt sein kann, beginnt.

Anstelle einer Prepaid-Karte kann auch ein Mobiltelefon oder ein tragbares Gerät verwendet werden, auf dessen Display ein ein- oder zweidimensionaler Barcode angezeigt wird, welcher einem bereits bezahlten Betrag für die Stromversorgung entspricht. Der Barcode kann durch eine Scaneinrichtung des Systems zur Stromversorgung gelesen werden. Das Erwerben des "Stromguthabens" kann beispielsweise über eine RFID- bzw. NFC-Interaktion mit einer Einrichtung des Ladestützpunktes, mit einer Einrichtung eines Parkhauses oder auch mittels einer Internet-basierten Transaktion erfolgen.

Das hier vorgestellte System zur Stromversorgung eines Elektrofahrzeugs auf einem Stellplatz kann in Parkhäusern, in Parkplätzen von Supermärkten, Hotels, Flughäfen, Sportstadien und dergleichen implementiert werden.

## Patentansprüche

1. System zur Stromversorgung eines Elektrofahrzeugs auf einem Stellplatz, **dadurch gekennzeichnet, dass** es für jeden Stellplatz oder für eine Gruppe von Stellplätzen einen dem Stellplatz bzw. der Gruppe von Stellplätzen zugeordneten Ladestützpunkt aufweist, welcher Mittel zur Stromversorgung des Elektroautos, zur Erfassung des verbrauchten Stroms, zur Identifikation bzw. Erfassung des Fahrzeugs zum Zweck der Abrechnung des verbrauchten Stroms und eine Einrichtung zur Bezahlung des verbrauchten Stroms umfasst.

2. System zur Stromversorgung eines Elektrofahrzeugs auf einem Stellplatz, nach Anspruch 1, **dadurch gekennzeichnet, dass** die Mittel zur Identifikation bzw. Erfassung des Fahrzeugs als RFID- bzw. NFC- fähige Geräte ausgeführt sind, wobei durch eine RFID- bzw. NFC-Interaktion zwischen einem mobilen Gerät oder einem Mobiltelefon des Benutzers des Elektrofahrzeugs und der Mittel zur Identifikation bzw. Erfassung des Fahrzeugs die Stromversorgung aktivierbar ist und wobei das Fahrzeug mittels der RFID- bzw. NFC-Interaktion durch eine eindeutige Zuordnungsnummer erfassbar bzw. identifizierbar ist, der der Stromverbrauch zuordenbar ist und die der Abrechnung des Stromverbrauchs dient.

3. System zur Stromversorgung eines Elektrofahrzeugs auf einem Stellplatz, nach Anspruch 2, **dadurch gekennzeichnet, dass** die Zuordnungsnummer die Mobiltelefonnummer, die Nummer der SIM-Karte des Mobiltelefons oder eine während der RFID- bzw. NFC-Interaktion zu vergebende Nummer ist, die im mobilen Gerät bzw. im Mobiltelefon gespeichert wird.

4. System zur Stromversorgung eines Elektrofahrzeugs auf einem Stellplatz, nach Anspruch 2 oder 3, **dadurch gekennzeichnet, dass** der Stromverbrauch nach Beendigung der Stromversorgung beim Verlassen des Stellplatzes mittels einer erneuten RFID- bzw. NFC-Interaktion zwischen dem mobilen Gerät bzw. dem Mobiltelefon des Benutzers und der Einrichtung zur Bezahlung über im mobilen Gerät bzw. Mobiltelefon gespeicherten Kreditkarten- oder Bankverbindungsdaten oder über eine Direktbezahlung über die Telefonnummer des Mobiltelefons bezahlt werden kann, wobei die Verbrauchsinformationen sowie die eindeutige Zuordnungsnummer des Fahrzeugs von den Mitteln zur Identifikation bzw. Erfassung des Fahrzeugs direkt oder über einen zentralen Server, welcher mit der Einrichtung zur Bezahlung verbunden ist, an die Einrichtung zur Bezahlung übermittelt werden.

5. System zur Stromversorgung eines Elektrofahrzeugs auf einem Stellplatz, nach Anspruch 2 oder 3, **dadurch gekennzeichnet, dass** nach Beendigung der Stromversorgung mittels einer erneuten RFID- bzw. NFC-Interaktion zwischen dem tragbaren Gerät bzw. Mobiltelefon des Benutzers und dem RFID- bzw. NFCfähigen Gerät des Ladestützpunktes der dem Stromverbrauch entsprechende Betrag auf das tragbare Gerät bzw. das Mobiltelefon in Form eines ein- oder zweidimensionalen Barcodes übertragbar ist, wobei beim Verlassen des Stellplatzes der Barcode durch die Einrichtung zur Bezahlung ausgelesen wird und der zu zahlende Betrag angezeigt wird, und wobei der Betrag über im mobilen Gerät bzw. Mobiltelefon gespeicherten Kreditkarten- oder Bankverbindungsdaten oder über eine Direktbezahlung über die Telefonnummer des Mobiltelefons bezahlt werden kann.

6. System zur Stromversorgung eines Elektrofahrzeugs auf einem Stellplatz, nach Anspruch 1, **dadurch gekennzeichnet, dass** die Mittel zur Identifikation bzw. Erfassung des Fahrzeugs eine Einrichtung zur Kennzeichenerfassung des Fahrzeugs umfassen, wobei nach erfolgter Kennzeichenerfassung die Stromversorgung aktivierbar ist wobei beim Verlassen des Stellplatzes anhand derselben oder einer weiteren Einrichtung zur Kennzeichenerfassung das Fahrzeug identifiziert und an der Einrichtung zur Bezahlung der zu zahlende Betrag, der dem Stromverbrauch entspricht, angezeigt wird.

7. System zur Stromversorgung eines Elektrofahrzeugs auf einem Stellplatz, nach Anspruch 1, **dadurch gekennzeichnet, dass** die Mittel zur Identifikation bzw. Erfassung des Fahrzeugs eine Einrichtung zur Herstellung einer drahtlosen Netzwerkverbindung bzw. eine WLAN-Einrichtung umfassen, über die eine Verbindung mit einer Einrichtung zur Herstellung einer drahtlosen Netzwerkverbindung bzw. einer WLAN-Einrichtung des Fahrzeugs oder eines tragbaren Gerätes bzw. eines Mobiltelefons des Benutzers herstellbar ist, durch die eine eindeutige Zuordnungsnummer des Fahrzeugs an die Mittel zur Identifikation bzw. Erfassung des Fahrzeugs übertragbar ist, wobei nach erfolgter Übertragung der Zuordnungsnummer die Stromversorgung aktivierbar ist.

8. System zur Stromversorgung eines Elektrofahrzeugs auf einem Stellplatz, nach Anspruch 7, **dadurch gekennzeichnet, dass** die Zuordnungsnummer das Kennzeichen des Fahrzeugs, die Mobiltelefonnummer des Mobiltelefons, die Nummer der SIM-Karte des Mobiltelefons oder eine über die drahtlose Netzwerkverbindung bzw. WLAN - Verbindung zu vergebende Nummer ist, die in einem Computer des Fahrzeugs oder im mobilen Gerät bzw. im Mobiltelefon gespeichert wird.

9. System zur Stromversorgung eines Elektrofahrzeugs auf einem Stellplatz, nach Anspruch 7 oder 8, **dadurch gekennzeichnet, dass** nach Beendigung der Stromversorgung beim Verlassen des Stellplatzes mittels einer drahtlosen Netzwerkverbindung bzw. einer WLAN - Verbindung zwischen einem Computer des Fahrzeugs oder dem mobilen Gerät bzw. dem Mobiltelefon des Benutzers und der Einrichtung zur Bezahlung anhand der Zuordnungsnummer der zu zahlende Betrag ermittelbar ist, wobei der zu zahlende betrag über im Computer des Fahrzeugs oder im mobilen Gerät bzw. Mobiltelefon des Benutzers gespeicherte Kreditkarten-oder Bankverbindungsdaten oder über eine Direktbezahlung über die Telefonnummer des Mobiltelefons bezahlt werden kann, wobei die Verbrauchsinformationen sowie die Zuordnungsnummer des Fahrzeugs von den Mitteln zur Identifikation bzw. Erfassung des Fahrzeugs direkt oder über einen zentralen Server, welcher mit der Einrichtung zur Bezahlung verbunden ist, an die Einrichtung zur Bezahlung übermittelbar sind.

10. System zur Stromversorgung eines Elektrofahrzeugs auf einem Stellplatz, nach Anspruch 1, **dadurch gekennzeichnet, dass** für den Fall, dass die Stromversorgung des Elektrofahrzeugs über ein an das Fahrzeug anzuschließendes Kabel erfolgt, das Kabel derart ausgeführt ist, dass neben der Stromleitung auch eine Datenleitung vorgesehen ist, über die der Identifikation- bzw. der Erfassung des Fahrzeugs dienenden Daten von einem Computer des Fahrzeugs an den Ladestützpunkt übertragbar sind oder dass die Übertragung der der Identifikation- bzw. der Erfassung des Fahrzeugs dienenden Daten von einem Computer des Fahrzeugs an den Ladestützpunkt über die Stromleitung des Kabels erfolgt.

11. System zur Stromversorgung eines Elektrofahrzeugs auf einem Stellplatz, nach Anspruch 10, **dadurch gekennzeichnet, dass** durch das Kabel das Kennzeichen des Fahrzeugs an den Ladestützpunkt übertragbar ist, sodass beim Verlassen des Stellplatzes anhand einer Kennzeichenerkennung des Fahrzeugs die zu zahlende Summe angezeigt werden kann.

12. System zur Stromversorgung eines Elektrofahrzeugs auf einem Stellplatz, nach Anspruch 10 oder 11, **dadurch gekennzeichnet, dass** mittels des Kabels die dem Stromverbrauch entsprechende Summe über im Computer des Fahrzeugs gespeicherten Kreditkarten- oder Bankverbindungsdaten zahlbar ist.

13. System zur Stromversorgung eines Elektrofahrzeugs auf einem Stellplatz, nach Anspruch 1, **dadurch gekennzeichnet, dass** die Mittel zur Identifikation bzw. Erfassung des mit Strom zu versorgenden Elektrofahrzeugs eine Leseeinrichtung für eine RFID- bzw. NFC-Karte, eine Barcodekarte oder für eine Magnetkarte umfassen, wobei die Aktivierung der Stromversorgung durch Einlesen der Karte erfolgt, wobei für den Fall eines Parkhauses diese Karte das Parkticket ist, welches der Fahrer beim Einfahren in das Parkhaus erhält und wobei zur Ermittlung des für die Stromversorgung zu zahlenden Betrags die Karte von der Einrichtung zur Bezahlung eingelesen wird, wobei die Zuordnung des Stromverbrauchs zum Fahrzeug anhand der Kartennummer oder weiterer auf der Karte abgelegten Daten erfolgt.

14. System zur Stromversorgung eines Elektrofahrzeugs auf einem Stellplatz, nach Anspruch 13, **dadurch gekennzeichnet, dass** für den Fall eines Parkhauses beim Bezahlen der Parkgebühr am Parkautomaten oder an einer am Ausgang angeordneten Zugangskontrollvorrichtung anhand der Nummer der Karte bzw. des Parktickets oder anhand weiterer auf der Karte abgelegten Daten die Summe aus den Parkgebühren und den Gebühren für den verbrauchten Strom zur Bezahlung angezeigt wird.

15. System zur Stromversorgung eines Elektrofahrzeugs auf einem Stellplatz, nach Anspruch 13 oder 14, **dadurch gekennzeichnet, dass** nach Beendigung der Stromversorgung eine erneute Interaktion der Karte mit der Leseeinrichtung erfolgt, wobei die Leseeinrichtung auch als Schreibeinrichtung für eine RFID- bzw. NFC-Karte, eine Barcodekarte oder eine Magnetkarte ausgeführt ist und der für den Stromverbrauch zu zahlende Betrag auf der Karte kodiert wird.

16. System zur Stromversorgung eines Elektrofahrzeugs auf einem Stellplatz, nach Anspruch 1, **dadurch gekennzeichnet, dass** der Ladestützpunkt als Mittel zur Identifikation bzw. Erfassung des Fahrzeugs eine Leseeinrichtung für bereits vorbezahlte Stromversorgungsberechtigungen aufweist, wobei die Stromversorgung nach dem Einlesen einer vorbezahlten Stromversorgungsberechtigung beginnt und beendet wird, wenn der dem Stromverbrauch entsprechende Betrag vorbezahlten Betrag entspricht oder wenn die Akkumulatoren des Fahrzeugs vollständig geladen sind.

17. System zur Stromversorgung eines Elektrofahrzeugs auf einem Stellplatz, nach Anspruch 16, **dadurch gekennzeichnet, dass** es als Mittel zur Identifikation bzw. Erfassung des Fahrzeugs eine Leseeinrichtung für Prepaid-Karten aufweist, die als RFID- bzw. NFC-Karten oder als Magnetkarten ausgeführt sind oder dass die Mittel zur Identifikation bzw. Erfassung des Fahrzeugs als Scaneinrichtungen für ein- oder zweidimensionale Barcodes ausgeführt sind, die auf einem Display eines tragbaren Gerätes oder Mobiltelefons anzeigbar sind.

18. System zur Stromversorgung eines Elektrofahrzeugs auf einem Stellplatz, nach einem der vorangehenden Ansprüche, **dadurch gekennzeichnet, dass** für den Fall, dass der Stellplatz in einem Parkhaus vorgesehen ist, die Einrichtung zur Bezahlung in eine Zugangskontrollvorrichtung des Parkhauses integriert ist, wobei die Bezahlung des verbrauchten Stroms in einem Schritt mit der Bezahlung der Parkgebühren erfolgt.

## Geänderte Patentansprüche

### Geänderte Patentansprüche gemäss Regel 137(2) EPÜ.

**1.** System zur Stromversorgung eines Elektrofahrzeugs auf einem Stellplatz, welches für jeden Stellplatz oder für eine Gruppe von Stellplätzen einen dem Stellplatz bzw. der Gruppe von Stellplätzen zugeordneten Ladestützpunkt aufweist, der Mittel zur Stromversorgung des Elektroautos, zur Erfassung des verbrauchten Stroms, zur Identifikation bzw. Erfassung des Fahrzeugs zum Zweck der Abrechnung des verbrauchten Stroms und eine Einrichtung zur Bezahlung des verbrauchten Stroms umfasst, **dadurch gekennzeichnet, dass** die Mittel zur Identifikation bzw. Erfassung des Fahrzeugs als RFID- bzw. NFC- fähige Geräte ausgeführt sind, wobei durch eine RFID- bzw. NFC-Interaktion zwischen einem mobilen Gerät oder einem Mobiltelefon des Benutzers des Elektrofahrzeugs und der Mittel zur Identifikation bzw. Erfassung des Fahrzeugs die Stromversorgung aktivierbar ist, wobei das Fahrzeug mittels der RFID- bzw. NFC-Interaktion durch eine eindeutige Zuordnungsnummer erfassbar bzw. identifizierbar ist, der der Stromverbrauch zuordenbar ist und die der Abrechnung des Stromverbrauchs dient, wobei die Zuordnungsnummer die Mobiltelefonnummer, die Nummer der SIM-Karte des Mobiltelefons oder eine während der RFID- bzw. NFC-Interaktion zu vergebende Nummer ist, die im mobilen Gerät bzw. im Mobiltelefon gespeichert wird und wobei der Stromverbrauch nach Beendigung der Stromversorgung beim Verlassen des Stellplatzes mittels einer erneuten RFID- bzw. NFC-Interaktion zwischen dem mobilen Gerät bzw. dem Mobiltelefon des Benutzers und der Einrichtung zur Bezahlung über im mobilen Gerät bzw. Mobiltelefon gespeicherten Kreditkarten- oder Bankverbindungsdaten oder über eine Direktbezahlung über die Telefonnummer des Mobiltelefons bezahlt werden kann, wobei die Verbrauchsinformationen sowie die eindeutige Zuordnungsnummer des Fahrzeugs von den-Mitteln zur Identifikation bzw. Erfassung des Fahrzeugs direkt oder über einen zentralen Server, welcher mit der Einrichtung zur Bezahlung verbunden ist, an die Einrichtung zur Bezahlung übermittelt werden.

**2.** System zur Stromversorgung eines Elektrofahrzeugs auf einem Stellplatz, welches für jeden Stellplatz oder für eine Gruppe von Stellplätzen einen dem Stellplatz bzw. der Gruppe von Stellplätzen zugeordneten Ladestützpunkt aufweist, der Mittel zur Stromversorgung des Elektroautos, zur Erfassung des verbrauchten Stroms, zur Identifikation bzw. Erfassung des Fahrzeugs zum Zweck der Abrechnung des verbrauchten Stroms und eine Einrichtung zur Bezahlung des verbrauchten Stroms umfasst, **dadurch gekennzeichnet, dass** die Mittel zur Identifikation bzw. Erfassung des Fahrzeugs als RFID- bzw. NFC- fähige Geräte ausgeführt sind, wobei durch eine RFID- bzw. NFC-Interaktion zwischen einem mobilen Gerät oder einem Mobiltelefon des Benutzers des Elektrofahrzeugs und der Mittel zur Identifikation bzw. Erfassung des Fahrzeugs die Stromversorgung aktivierbar ist, wobei das Fahrzeug mittels der RFID- bzw. NFC-Interaktion durch eine eindeutige Zuordnungsnummer erfassbar bzw. identifizierbar ist, der der Stromverbrauch zuordenbar ist und die der Abrechnung des Stromverbrauchs dient, wobei die Zuordnungsnummer die Mobiltelefonnummer, die Nummer der SIM-Karte des Mobiltelefons oder eine während der RFID- bzw. NFC-Interaktion zu vergebende Nummer ist, die im mobilen Gerät bzw. im Mobiltelefon gespeichert wird und wobei nach Beendigung der Stromversorgung mittels einer erneuten RFID- bzw. NFC-Interaktion zwischen dem tragbaren Gerät bzw. Mobiltelefon des Benutzers und dem RFID- bzw. NFC-fähigen Gerät des Ladestützpunktes der dem Stromverbrauch entsprechende Betrag auf das tragbare Gerät bzw. das Mobiltelefon in Form eines ein- oder zweidimensionalen Barcodes übertragbar ist, wobei beim Verlassen des Stellplatzes der Barcode durch die Einrichtung zur Bezahlung ausgelesen wird und der zu zahlende Betrag angezeigt wird, und wobei der Betrag über im mobilen Gerät bzw. Mobiltelefon gespeicherten Kreditkarten- oder Bankverbindungsdaten oder über eine Direktbezahlung über die Telefonnummer des Mobiltelefons bezahlt werden kann.

**3.** System zur Stromversorgung eines Elektrofahrzeugs auf einem Stellplatz, welches für jeden Stellplatz oder für eine Gruppe von Stellplätzen einen dem Stellplatz bzw. der Gruppe von Stellplätzen zugeordneten Ladestützpunkt aufweist, der Mittel zur Stromversorgung des Elektroautos, zur Erfassung des verbrauchten Stroms, zur Identifikation bzw. Erfassung des Fahrzeugs zum Zweck der Abrechnung des verbrauchten Stroms und eine Einrichtung zur Bezahlung des verbrauchten Stroms umfasst, **dadurch gekennzeichnet, dass** die Mittel zur Identifikation bzw. Erfassung des Fahrzeugs eine Einrichtung zur Herstellung einer drahtlosen Netzwerkverbindung bzw. eine WLAN-Einrichtung umfassen, über die eine Verbindung mit einer Einrichtung zur Herstellung einer drahtlosen Netzwerkverbindung bzw. einer WLAN-Einrichtung des Fahrzeugs oder eines tragbaren Gerätes bzw. eines Mobiltelefons des Benutzers herstellbar ist, durch die eine eindeutige Zuordnungsnummer des Fahrzeugs an die Mittel zur Identifikation bzw. Erfassung des Fahrzeugs übertragbar ist, wobei nach erfolgter Übertragung der Zuordnungsnummer die Stromversorgung aktivierbar ist.

**4.** System zur Stromversorgung eines Elektrofahrzeugs auf einem Stellplatz, nach Anspruch 3, **dadurch gekennzeichnet, dass** die Zuordnungsnummer das Kennzeichen des Fahrzeugs, die Mobiltelefonnummer des Mobiltelefons, die Nummer der SIM-Karte des Mobiltelefons oder eine über die drahtlose Netzwerkverbindung bzw. WLAN - Verbindung zu vergebende Nummer ist, die in einem Computer des Fahrzeugs oder im mobilen Gerät bzw. im Mobiltelefon gespeichert wird.

**5.** System zur Stromversorgung eines Elektrofahrzeugs auf einem Stellplatz, nach Anspruch 3 oder 4, **dadurch gekennzeichnet, dass** nach Beendigung der Stromversorgung beim Verlassen des Stellplatzes mittels einer drahtlosen Netzwerkverbindung bzw. einer WLAN - Verbindung zwischen einem Computer des Fahrzeugs oder dem mobilen Gerät bzw. dem Mobiltelefon des Benutzers und der Einrichtung zur Bezahlung anhand der Zuordnungsnummer der zu zahlende Betrag ermittelbar ist, wobei der zu zahlende betrag über im Computer des Fahrzeugs oder im mobilen Gerät bzw. Mobiltelefon des Benutzers gespeicherte Kreditkartenoder Bankverbindungsdaten oder über eine Direktbezahlung über die Telefonnummer des Mobiltelefons bezahlt werden kann, wobei die Verbrauchsinformationen sowie die Zuordnungsnummer des Fahrzeugs von den Mitteln zur Identifikation bzw. Erfassung des Fahrzeugs direkt oder über einen zentralen Server, welcher mit der Einrichtung zur Bezahlung verbunden ist, an die Einrichtung zur Bezahlung übermittelbar sind.

**6.** System zur Stromversorgung eines Elektrofahrzeugs auf einem Stellplatz, welches für jeden Stellplatz oder für eine Gruppe von Stellplätzen einen dem Stellplatz bzw. der Gruppe von Stellplätzen zugeordneten Ladestützpunkt aufweist, der Mittel zur Stromversorgung des Elektroautos, zur Erfassung des verbrauchten Stroms, zur Identifikation bzw. Erfassung des Fahrzeugs zum Zweck der Abrechnung des verbrauchten Stroms und eine Einrichtung zur Bezahlung des verbrauchten Stroms umfasst, **dadurch gekennzeichnet, dass** die Mittel zur Identifikation bzw. Erfassung des Fahrzeugs als RFID- bzw. NFC- fähige Geräte ausgeführt sind, wobei durch eine RFID- bzw. NFC-Interaktion zwischen einem mobilen Gerät oder einem Mobiltelefon des Benutzers des Elektrofahrzeugs und der Mittel zur Identifikation bzw. Erfassung des Fahrzeugs die Stromversorgung aktivierbar ist, wobei das Fahrzeug mittels der RFID- bzw. NFC-Interaktion durch eine eindeutige Zuordnungsnummer erfassbar bzw. identifizierbar ist, der der Stromverbrauch zuordenbar ist und die der Abrechnung des Stromverbrauchs dient, **dadurch gekennzeichnet, dass** für den Fall, dass die Stromversorgung des Elektrofahrzeugs über ein an das Fahrzeug anzuschließendes Kabel erfolgt, das Kabel derart ausgeführt ist, dass die Übertragung der der Identifikation- bzw. der Erfassung des Fahrzeugs dienenden Daten von einem Computer des Fahrzeugs an den Ladestützpunkt über die Stromleitung des Kabels erfolgt.

**7.** System zur Stromversorgung eines Elektrofahrzeugs auf einem Stellplatz, nach Anspruch 6, **dadurch gekennzeichnet, dass** durch das Kabel das Kennzeichen des Fahrzeugs an den Ladestützpunkt übertragbar ist, sodass beim Verlassen des Stellplatzes anhand einer Kennzeichenerkennung des Fahrzeugs die zu zahlende Summe angezeigt werden kann.

**8.** System zur Stromversorgung eines Elektrofahrzeugs auf einem Stellplatz, nach Anspruch 6 oder 7, **dadurch gekennzeichnet, dass** mittels des Kabels die dem Stromverbrauch entsprechende Summe über im Computer des Fahrzeugs gespeicherten Kreditkarten- oder Bankverbindungsdaten zahlbar ist.

**9.** System zur Stromversorgung eines Elektrofahrzeugs auf einem Stellplatz, welches für jeden Stellplatz oder für eine Gruppe von Stellplätzen einen dem Stellplatz bzw. der Gruppe von Stellplätzen zugeordneten Ladestützpunkt aufweist, der Mittel zur Stromversorgung des Elektroautos, zur Erfassung des verbrauchten Stroms, zur Identifikation bzw. Erfassung des Fahrzeugs zum Zweck der Abrechnung des verbrauchten Stroms und eine Einrichtung zur Bezahlung des verbrauchten Stroms umfasst, **dadurch gekennzeichnet, dass** für den Fall eines Parkhauses die Mittel zur Identifikation bzw. Erfassung des mit Strom zu versorgenden Elektrofahrzeugs eine Leseeinrichtung für eine RFID- bzw. NFC-Karte, eine Barcodekarte oder für eine Magnetkarte, welche das Parkticket ist, umfassen, wobei die Aktivierung der Stromversorgung durch Einlesen der Karte erfolgt, welche der Fahrer beim Einfahren in das Parkhaus erhält und wobei zur Ermittlung des für die Stromversorgung zu zahlenden Betrags die Karte von der Einrichtung zur Bezahlung eingelesen wird, wobei die Zuordnung des Stromverbrauchs zum Fahrzeug anhand der Kartennummer oder weiterer auf der Karte abgelegten Daten erfolgt und wobei beim Bezahlen der Parkgebühr am Parkautomaten oder an einer am Ausgang angeordneten Zugangskontrollvorrichtung anhand der Nummer der Karte bzw. des Parktickets oder anhand weiterer auf der Karte abgelegten Daten die Summe aus den Parkgebühren und den Gebühren für den verbrauchten Strom zur Bezahlung angezeigt wird.

**10.** System zur Stromversorgung eines Elektrofahrzeugs auf einem Stellplatz, nach Anspruch 9, **dadurch gekennzeichnet, dass** nach Beendigung der Stromversorgung eine erneute Interaktion der Karte mit der Leseeinrichtung erfolgt, wobei die Leseeinrichtung auch als Schreibeinrichtung für eine RFID- bzw. NFC-Karte, eine Barcodekarte oder eine Magnetkarte ausgeführt ist und der für den Stromverbrauch zu zahlende Betrag auf der Karte kodiert wird.

**11.** System zur Stromversorgung eines Elektrofahrzeugs auf einem Stellplatz, welches für jeden Stellplatz oder für eine Gruppe von Stellplätzen einen dem Stellplatz bzw. der Gruppe von Stellplätzen zugeordneten Ladestützpunkt aufweist, der Mittel zur Stromversorgung des Elektroautos, zur Erfassung des verbrauchten Stroms, zur Identifikation bzw. Erfassung des Fahrzeugs zum Zweck der Abrechnung des verbrauchten Stroms und eine Einrichtung zur Bezahlung des verbrauchten Stroms umfasst, **dadurch gekennzeichnet, dass** der Ladestützpunkt als Mittel zur Identifikation bzw. Erfassung des Fahrzeugs eine Leseeinrichtung für bereits vorbezahlte Stromversorgungsberechtigungen aufweist, wobei die Stromversorgung nach dem Einlesen einer vorbezahlten Stromversorgungsberechtigung beginnt und beendet wird, wenn der dem Stromverbrauch entsprechende Betrag vorbezahlten Betrag entspricht oder wenn die Akkumulatoren des Fahrzeugs vollständig geladen sind, wobei die Mittel zur Identifikation bzw. Erfassung des Fahrzeugs als Scaneinrichtungen für einoder zweidimensionale Barcodes ausgeführt sind, die auf einem Display eines tragbaren Gerätes oder Mobiltelefons anzeigbar sind.

**12.** System zur Stromversorgung eines Elektrofahrzeugs auf einem Stellplatz, nach einem der vorangehenden Ansprüche, **dadurch gekennzeichnet, dass** für den Fall, dass der Stellplatz in einem Parkhaus vorgesehen ist, die Einrichtung zur Bezahlung in eine Zugangskontrollvorrichtung des Parkhauses integriert ist, wobei die Bezahlung des verbrauchten Stroms in einem Schritt mit der Bezahlung der Parkgebühren erfolgt.
